# EUROPÄISCHE PATENTANMELDUNG

(11) **EP 1 289 118 A1**
(43) Veröffentlichungstag der Anmeldung: **05.03.2003**
(21) Anmeldenummer: 01120357.7
(22) Anmeldetag: 24.08.2001
(51) Int. Cl.: H02P 9/08

(54) **Verfahren und Vorrichtung zum Hochfahren eines Turbosatzes**

(71) Anmelder: SIEMENS AKTIENGESELLSCHAFT, 80333 München (DE)
(72) Erfinder: Klaar, Jürgen, 47506 Neukirchen-Vluyn (DE)

(57) **Zusammenfassung**

Um eine rationelle Nutzung von für den Generatorbetrieb notwendigen Komponenten zu erreichen, wird beim Hochfahren eines Turbosatzes (27) mit einer Gasturbine (28), einem Generator (2) sowie einer Gleichrichtererregermaschine (10) diese als Asynchrongenerator betrieben, über den die Läuferwicklung (21) des Generators (2) mit Gleichstrom (GI_{DC}) versorgt wird. Dadurch sind zum Anfahren des Turbosatzes (27) weder Schleifringe noch ein gesonderter Anfahrmotor erforderlich.

## Beschreibung

Die Erfindung betrifft ein Verfahren zum Hochfahren eines Turbosatzes mit einer Gasturbine und einem mit einer bürstenlosen rotierenden Gleichrichtererregermaschine erregten Drehstromgenerator. Sie betrifft weiter eine Vorrichtung zur Durchführung des Verfahrens.

Ein Turbosatz, insbesondere mit einem Drehstromsynchrongenerator, wird üblicherweise für die Erzeugung elektrischer Energie in einem Kraftwerk eingesetzt. Der Turbosatz umfasst eine Gasturbine, den Drehstromsynchrongenerator und eine Erregerstromeinrichtung. Der erzeugte Drehstrom wird an der Ständerwicklung des Generators abgenommen, während die Läuferwicklung zur Erzeugung eines Magnetfeldes mit Gleichstrom erregt wird. Der Gleichstrom wird von einer bürstenlosen rotierenden Gleichrichtererregermaschine oder einer statischen thyristorgesteuerten Erregereinrichtung über Schleifringe bereitgestellt. Eine bürstenlose Gleichrichtererregermaschine mit Außenpolen ist derart mit dem Generator gekoppelt, dass ihr Läufer mit der Generatorwelle rotiert. In diesem Fall kann der zunächst in der Erregermaschine erzeugte Drehstrom mit Hilfe von mit der Läuferwelle der Erregermaschine rotierenden Gleichrichtern gleichgerichtet werden. Der von einer solchen Gleichrichtererregermaschine erzeugte Gleichstrom kann direkt, ohne Schleifringe, zum Läufer des Generators geleitet werden.

Im Gegensatz zu einem Turbosatz mit einer Dampfturbine als Antrieb kann eine Gasturbine den Turbosatz nicht selbständig hochfahren. Das Hochfahren des Turbosatzes erfolgt im Allgemeinen aus dem sogenannten Turnbetrieb mit einer Drehzahl von etwa 100 min⁻¹ bis 200 min⁻¹ wofür meist ein ölhydraulischer Antrieb verwendet wird heraus. Bekanntlich kann eine Gasturbine erst bei einer ausreichenden Drehzahl von ca. 1000 U/min gezündet werden und die weitere Hochfahrt bis zur Nenndrehzahl übernehmen. Um diese Grenzdrehzahl zu erreichen, kann ein gesonderter sogenannter Anfahrmotor oder der Generator als frequenzgesteuerter Motor zum Hochfahren verwendet werden.

Im Fall des Einsatzes eines Anfahrmotors ist dieser mit dem Turbosatz über eine Ausrück-Kupplung mechanisch verbunden und fährt diesen bis zur erforderlichen Grenzdrehzahl hoch. Wenn die Gasturbine das weitere Hochfahren übernimmt, wird der Motor abgekuppelt. Für diese Anordnung ist die Art der Erregung des Generators unerheblich, wenn man von der konstruktiven Gestaltung des sogenannten freien Wellenendes auf der Erregerseite des Generators absieht.

Für die Hochfahrt mit einem frequenzgesteuerten Generator, für die eine thyristorgesteuerte Anfahreinrichtung erforderlich ist, die in die Ankerwicklung des Generators Strom einspeist, wird eine kurzzeitige drehzahlabhängige Erregung der Läuferwicklung des Generators benötigt. Bei einem Generator mit Schleifringen erfolgt diese Einspeisung von einer statischen Gleichrichteranlage aus. Damit verbundene Nachteile sind insbesondere ein Verschleiss und andere Störungen bezüglich der Schleifringe und/oder Kohlebürsten, die für den Dauerbetrieb des Generators ausgelegt werden müssen. Hat der Turbosatz einen auf der Generatorwelle angebrachten rotierenden bürstenlosen Erregersatz oder ist dieser elektrisch und mechanisch direkt gekuppelt, dann ist ein frequenzgesteuertes Hochfahren nicht ohne Weiteres möglich, weil die erforderliche Erregung der Feldwicklung des Generators fehlt. Eine zwischenzeitliche Erregung für den Hochfahrvorgang über Hilfsschleifringe ist zwar denkbar, bringt jedoch ebenfalls die mit Schleifringen verbundenen Nachteile mit sich.

Der Erfindung liegt daher die Aufgabe zugrunde, ein Verfahren zum Hochfahren eines Turbosatzes mit einer Gasturbine und einer bürstenlosen rotierenden Gleichrichtereinrichtung anzugeben, bei dem eine rationelle Nutzung von für den Generatorbetrieb notwendigen Komponenten erreicht wird. Des weiteren soll eine zur Durchführung des Verfahrens besonders geeignete Vorrichtung angegeben werden.

Bezüglich des Verfahrens wird die genannte Aufgabe erfindungsgemäß gelöst durch die Merkmale des Anspruchs 1. Vorteilhafte Weiterbildungen sind Gegenstand der Ansprüche 2 bis 4.

Bei dem erfindungsgemäßen Verfahren wird einer Ständerwicklung (Feldwicklung) einer zusammen mit einem Generator und mit einer Turbine auf einer Welle angeordneten Gleichrichtererregermaschine Drehstrom zugeführt, der ein Drehfeld erzeugt, dessen Drehgeschwindigkeit von der der Welle abweicht und in der Läuferwicklung eine Drehspannung induziert. Der in der Läuferwicklung durch die induzierte Spannung erzeugte Strom wird durch eine mit der Läuferwicklung rotierende Gleichrichtereinrichtung gleichgerichtet und als Gleichstrom einer Läuferwicklung des Generators zugeführt, durch dessen Ständerwicklung ein frequenzgesteuerter Drehstrom geleitet wird.

Bezüglich der Vorrichtung wird die Aufgabe gelöst durch die Merkmale des Anspruchs 5. Dazu wird die im Generatorbetrieb des Turbosatzes gleichstromdurchflossene Erregerwicklung im Ständer der Gleichrichtermaschine umfunktioniert und als Drehstromerregerwicklung verwendet. Damit bei allen Drehzahlen der Erregerfluss groß genug ist, wird die Erregermaschine als Asynchrongenerator mit Gegendrehfeld betrieben. Durch die Zwischenschaltung eines Drehstromstellers in den in die Ständerwicklung der Erregermaschine einspeisenden Drehstromkreis kann der Erregerfluss entsprechend der Hochfahrt gesteuert werden. Über diese umfunktionierte Gleichrichtererregermaschine kann Strom ohne Schleifringe zum Generatorläufer geleitet werden. Der nicht mit Schleifringen ausgerüstete, d. h. schleifringfreie Generator kann somit als Stromrichtermotor arbeiten, so dass kein gesonderter Anfahrmotor erforderlich ist.

Die drehstromseitige Einspeisung der Feldwicklung der Gieichrichtererregermaschine wird abgeschaltet, sobald die Grenzdrehzahl erreicht ist, ab der die zunächst vom als Motor wirkenden Generator angetriebene Turbine selbsttätig hochfährt. Nach Beendigung des Hochfahrvorgangs kann die Gleichrichtererregermaschine in an sich bekannter Funktion eingesetzt werden, wobei in die Ständerwicklung Gleichstrom eingespeist wird. Alternativ kann in die Ständerwicklung der Gleichrichtererregermaschine Drehstrom eingespeist werden, der zur konstanten Nenndrehzahl des Turbosatzes asynchron ist. Über den Drehstromsteller kann ein Spannungsreglerkreis für den Turbogenerator aufgebaut werden.

Nachfolgend wird ausgehend von an sich bekannten Prinzipien ein Ausführungsbeispiel der Erfindung anhand von Zeichnungen näher erläutert. Darin zeigen:
- FIG 1: ein Prinzipschaltbild eines bekannten Zwischenkreisumrichters mit Stromeinspeisung in einen Stromrichtermotor,
- FIG 2: ein Prinzipschaltbild für den bekannten Betrieb eines Turbosatzes mit rotierender bürstenloser Erregermaschine,
- FIG 3: ein Prinzipschaltbild für das Hochfahren eines Turbosatzes mit rotierender bürstenloser Erregermaschine,
- FIG 4: ein Prinzipschaltbild für das Hochfahren und den Betrieb eines Turbosatzes mit rotierender bürstenloser Erregermaschine.

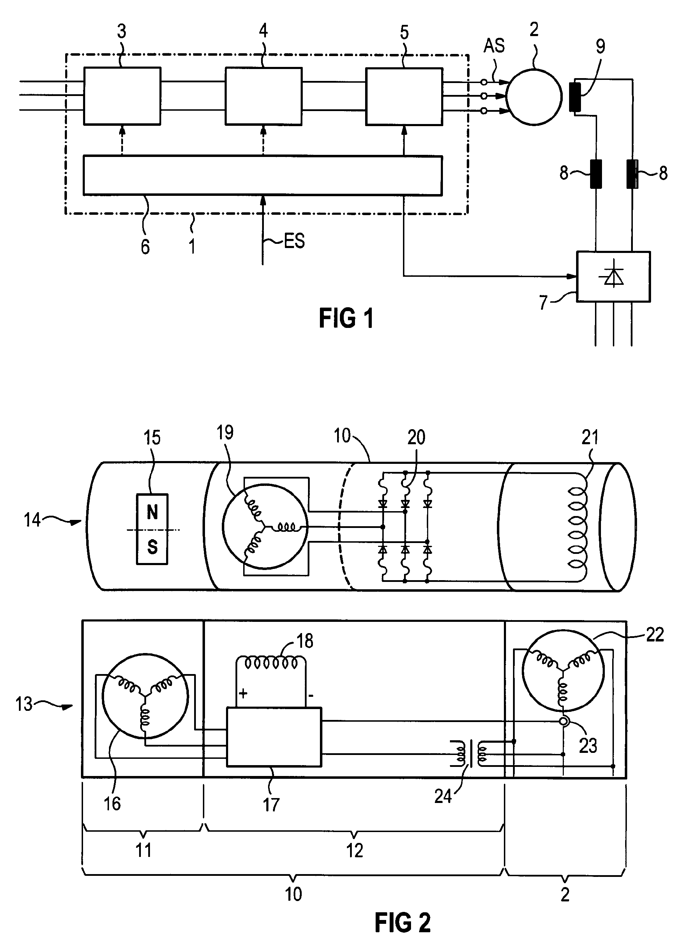

FIG 1 zeigt einen drehstromgespeisten Zwischenkreisumrichter 1 zur frequenzgesteuerten Drehstromversorgung eines Stromrichtermotors 2 während des Hochfahrvorgangs. Im bestimmungsgemäßen Betrieb nach Beendigung des Hochfahrvorgangs wird der Stromrichtermotor 2 zur generatorischen Stromerzeugung eingesetzt. Der Zwischenkreisumrichter 1 umfasst einen Gleichrichter 3, einen Zwischenkreis 4, der z. B. eine Drossel beinhaltet, einen Wechselrichter 5 sowie eine Steuerung und Regelung 6, der als Eingangssignal ES unter anderem ein Taktsignal einer nicht dargestellten Welle des Stromrichtermotors 2 zugeführt wird. Dem Zwischenkreis 4 wird während des Hochfahrvorgangs ein dem Belastungsgrad des Stromrichtermotors 2 entsprechender Gleichstrom eingeprägt. Der Wechselrichter 5, der vom Stromrichtermotor 2 getaktet und geführt wird, formt den Gleichstrom in ein drehfeldbildendes, pulsförmiges und spannungsvariables (sinusförmige Pulsbreitenmodulation) Ausgangssignal AS um. Die Steuerung und Regelung 6 ist verbunden mit einer Erregerstromversorgung 7, die über Schleifringe 8 einem Läufer 9 des Stromrichtermotors 2 einen Erregerstrom I_{f2} zuführt. Durch das Ausgangssignal AS des Wechselrichters 5 wird im Stromrichtermotor 2 ein Drehfeld erzeugt, das synchron mit dem Läufer 9 rotiert.

Die Erregerstromversorgung 7 wird üblicherweise als statischer Thyristorsatz ausgeführt. Für ein konstantes Drehmoment des Stromrichtermotors 2 ändern sich Spannung und Frequenz des Ausgangssignals AS des Zwischenkreisumrichters 1 proportional zueinander. Es werden zwei Arten von Zwischenkreisumrichtern 1 eingesetzt, nämlich Spannungs- und Stromzwischenkreisumrichter. Beim Erreichen einer Grenzdrehzahl, bei der eine nicht dargestellte Gasturbine den Hochlauf fortsetzten kann, wird der Zwischenkreisumrichter 1 und die Erregerstromversorgung 7 abgeschaltet und elektrisch vom im bestimmungsgemäßen Betrieb als Generator wirkenden Stromrichtermotor 2 getrennt, um diesen an die für den Generatorbetrieb erforderlichen Systeme schalten zu können.

FIG 2 zeigt das Prinzipschaltbild eines dem in FIG 1 dargestellten Stromrichtermotor 2 entsprechenden Generators 2 mit bürstenloser rotierender Gleichrichtererregermaschine 10, die eine Hilfserregermaschine 11 und eine Haupterregermaschine 12 umfasst. Sowohl der Generator 2 als auch die Gleichrichtererregermaschine 10 weisen stationäre Komponenten 13 und rotierende Komponenten 14 auf. In der Hilfserregermaschine 11 wird durch einen rotierenden Permanentmagneten 15 ein Strom in einer Hilfserregerwicklung 16 induziert, der einem Spannungsregler 17 zugeführt wird, an den eine Ständerwicklung 18 der Haupterregermaschine 12 angeschlossen ist. Anstelle der Spannungszuführung von der Hilfserregerwicklung 16 zum Spannungsregler 17 kann alternativ eine Spannungszuführung aus einem nicht dargestellten Netz zum Spannungsregler 17 vorgesehen sein. Die Ständerwicklung 18 erzeugt ein Feld, das in einer Läuferwicklung 19 der Haupterregermaschine 12 einen Strom induziert, der durch einen rotierenden Gleichrichter 20 gleichgerichtet wird. Dieser gleichgerichtete Strom wird einer Läuferwicklung 21 des Generators 2 zugeführt, die als rotierende Feldwicklung auf dem hier nicht dargestellten Läufer 9 angebracht ist. In einer Ständerwicklung 22 des Generators 2 wird dadurch ein Drehstrom erzeugt, der in ein nicht dargestelltes Netz eingespeist werden kann. Der Spannungsregler 17 ist über einen Stromwandler 23 und einen Spannungswandler 24 an die Ständerwicklung 22 angeschlossen.

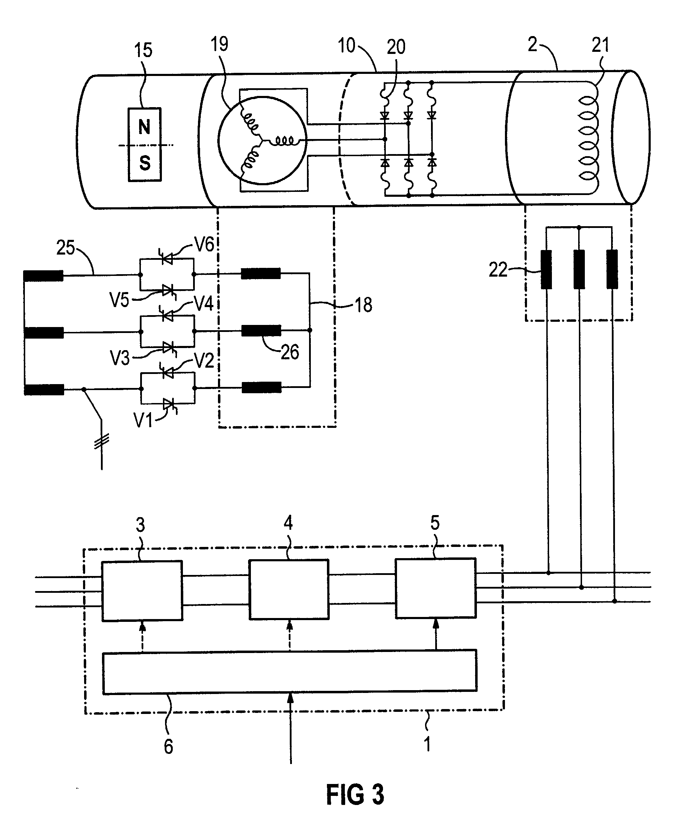

FIG 3 zeigt ein Prinzipschaltbild für den erfindungsgemäßen Hochfahrvorgang des in diesem Fall als Stromrichtermotor wirkenden Generators 2 mit bürstenloser rotierender Gleichrichtererregermaschine 10. Der Ständerwicklung 22 des Generators 2 wird in an sich bekannter Weise (FIG 1) ein frequenzgesteuerter Drehstrom über den Zwischenkreisumrichter 1 zugeführt. Im Unterschied hierzu wird jedoch der Erregerstrom nicht über Schleifringe 8 in die Läuferwicklung 21 eingespeist, sondern in der Gleichrichtererregermaschine 10 erzeugt. Dabei wird über einen Drehstromsteller 25 mit Thyristoren V1 - V6 ein Drehstrom, beispielsweise mit einer Frequenz von 50 Hz, der mit drei Impedanzen 26 dargestellten Ständerwicklung 18 der Gleichrichtererregermaschine 10 zugeführt. Durch den Drehstrom in der Ständerwicklung 18 wird in der Gleichrichtererregermaschine 10 ein Drehfeld erzeugt, das entgegengesetzt zur Läuferwicklung 19 rotiert und dort eine Spannung induziert. Diese Spannung dient zur Erzeugung eines Stroms, der durch die Läuferwicklung 21 des als frequenzgesteuerten Synchronmotor genutzten Generators 2 fließt.

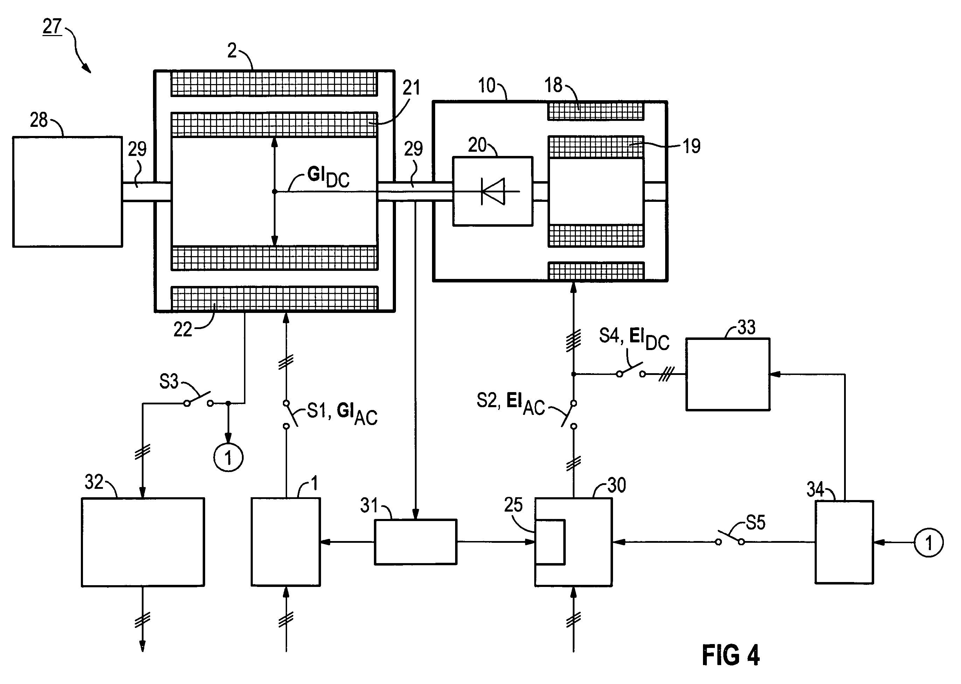

FIG 4 zeigt schematisch einen erfindungsgemäßen Turbosatz 27 mit einer Gasturbine 28, dem Generator 2, der Gleichrichtererregermaschine 10 sowie einer gemeinsamen Welle 29. Während des Hochfahrvorgangs wird von der Gleichrichtererregermaschine 10 Gleichstrom GI_{DC} in die Läuferwicklung 21 des Generators 2 gespeist. Gleichzeitig wird die Ständerwicklung 22 des Generators 2 über einen Zwischenkreisumrichter 1 mit frequenz- und spannungsvariablem Drehstrom GI_{AC} versorgt. Der Generator 2 wirkt somit während des Hochfahrvorgangs als Stromrichtermotor, der die Turbine 28 antreibt.

Die Ständerwicklung 18 der Gleichrichtererregermaschine 10 wird beim Hochfahrvorgang über eine Erregeranfahreinrichtung 30 mit Drehstrom EI_{AC} und variabler Spannung versorgt. Der Drehstromsteller 25 ist Teil der Erregeranfahreinrichtung 30. Die steuerungstechnische Kopplung zwischen dem Zwischenkreisumrichter 1 des Generators 2, der Generatorwelle 29 und der Erregeranfahreinrichtung 30 der Gleichrichtererregermaschine 10 erfolgt in dem Steuer- und Regelbaustein 31. Die Gleichrichtererregermaschine 10 arbeitet als Asynchrongenerator, dessen Läuferwicklung 19 den Gleichrichter 20 speist. Der in der Läuferwicklung 19 erzeugte Strom wird durch den mit der Läuferwicklung 19 rotierenden Gleichrichter 20 gleichgerichtet, bevor dieser als Gleichstrom GI_{DC} zur Läuferwicklung 21 des Generators 2 geleitet wird. Auf diese Weise dient die Gleichrichtererregermaschine 10 zur Stromversorgung der Läuferwicklung 21 des Generators 2. Für das Hochfahren des Turbosatzes 27 werden somit weder Schleifringe noch ein gesonderter Anfahrmotor benötigt.

Erreicht die Turbine 28 eine zum weiteren, selbsttätigen Hochfahren benötigte Grenzdrehzahl von z. B. 1000 Umdrehungen pro Minute, so werden der Zwischenkreisumrichter 1 vom Generator 2 und die Erregeranfahreinrichtung 30 von der Gleichrichtererregermaschine 10 durch symbolisch dargestellte Schalt- oder Steuerelemente S1 bzw. S2 getrennt.

Bei bestimmungsgemäßem Betrieb des Generators 2 wird der erzeugte Strom über den Generatorschalter S3 und den Transformator 32 ins Netz gespeist. Gleichzeitig kann die Ständerwicklung 18 der Gleichrichtererregermaschine 10 in an sich bekannter Weise über eine Erregereinrichtung 33 und einen Schalter S4 mit Gleichstrom EI_{DC} versorgt werden. Die Erregereinrichtung 33, die den Gleichstrom EI_{DC} als Feldstrom der Ständerwicklung 18 liefert, ist zum Regeln des Feldstromes mit einem Spannungsregler 34 verbunden. Alternativ kann die Gleichrichtererregermaschine 10 über die Erregeranfahreinrichtung 30, die nunmehr vom Spannungsregler 34 geregelt wird, für den Leistungsbetrieb des Generators 2 verwendet werden. Der Spannungsregler 34 ist über den Schalter S5 mit der Erregeranfahreinrichtung 30 verbunden. Ebenso geht als Parameter der in der Läuferwicklung 21 des Generators 2 erzeugte Strom in den Spannungsregler 34 ein.

## Patentansprüche

1. Verfahren zum Hochfahren eines Turbosatzes (27) mit einer Gasturbine (28) und einem Generator (2) sowie einer Gleichrichtererregermaschine (10),
- wobei einer Ständerwicklung (18) der Gleichrichtererregermaschine (10) ein Drehstrom (EI_{AC}) zugeführt wird, der in einer Läuferwicklung (19) der Gleichrichtererregermaschine (10) als Asynchrongenerator eine Spannung induziert,
- wobei ein in der Läuferwicklung (19) durch die induzierte Spannung erzeugter Strom durch einen mit der Läuferwicklung (19) rotierenden Gleichrichter (20) gleichgerichtet und als Gleichstrom (GI_{DC}) einer Läuferwicklung (21) des Generators (2) zugeführt wird, und
- wobei durch eine Ständerwicklung (22) des als Stromrichtermotor wirkenden Generators (2) ein Drehstrom (GI_{AC}) geleitet wird.

2. Verfahren nach Anspruch 1, **dadurch gekennzeichnet, dass** durch eine Variation des Drehstroms (EI_{AC}) der Gleichstrom (GI_{DC}) in der Läuferwicklung (21) gesteuert wird.

3. Verfahren nach Anspruch 1 oder 2, **dadurch gekennzeichnet, dass** bei Erreichen einer Grenzdrehzahl der Turbine (28) die Einspeisung des Drehstroms (EI_{AC}) in die Ständerwicklung (18) unterbrochen und die Ständerwicklung (22) des Generators (2) von einem Zwischenkreisumrichter (1) getrennt wird.

4. Vorrichtung zum Hochfahren eines Turbosatzes (27) mit einer Gasturbine (28) und einem Generator (2) sowie einer Gleichrichtererregermaschine (10),
- wobei eine Ständerwicklung (18) der Gleichrichtererregermaschine (10) die Erregerwicklung eines Asynchrongenerators bildet, und
- wobei die Gleichrichtererregermaschine (10) einen drehbar angeordneten Gleichrichter (20) aufweist, der gleichstromseitig mit einer Läuferwicklung (21) des Generators (2) verbunden ist, dessen Ständerwicklung (22) über eine Drehstromleitung mit einem Zwischenkreisumrichter (1) verbunden ist.

5. Vorrichtung nach Anspruch 4, **gekennzeichnet durch** einen Drehstromsteller (25), über den ein Gleichstrom (GI_{DC}) in der Läuferwicklung (21) einstellbar ist.

6. Turbosatz (27) mit einer Vorrichtung nach Anspruch 4 oder 5.
